# FASCICULE DE BREVET EUROPEEN

(11) **EP 1 691 569 B1**
(45) Date de publication et mention de la délivrance du brevet: **31.10.2012**
(21) Numéro de dépôt: 05112399.0
(22) Date de dépôt: 19.12.2005
(51) Int. Cl.: H04Q 11/00, H04B 10/17

(54) **Dispositif de commutation optique semi-transparant réconfigurable**
Halbtransparente rekonfigurierbare optische Schaltvorrichtung
Semi-transparent reconfigurable optical switching device

(30) Priorité: 22.12.2004 FR 0453147
(43) Date de publication de la demande: 16.08.2006
(73) Titulaire: Alcatel Lucent, 75007 Paris (FR)
(72) Inventeur: Zami, Thierry, 91300 Massy (FR); Peloso, Pierre, 91140 Villebon sur Yvette (FR)
(74) Mandataire: Sciaux, Edmond

(56) Documents cités:
- US-A1- 2002 197 000
- TECK YOONG CHAI ET AL: "CROSSTALK ANALYSIS FOR LIMITED-WAVELENGTH-INTERCHANGING CROSS CONNECTS" IEEE PHOTONICS TECHNOLOGY LETTERS, IEEE INC. NEW YORK, US, vol. 14, no. 5, mai 2002 (2002-05), pages 696-698, XP001116427 ISSN: 1041-1135
- XUELI HOU ET AL: "Design of wavelength-convertible optical switches for the all-optical next-generation internet" HIGH PERFORMANCE SWITCHING AND ROUTING, 2001 IEEE WORKSHOP ON 29-31 MAY 2001, PISCATAWAY, NJ, USA,IEEE, 29 mai 2001 (2001-05-29), pages 97-101, XP010542779 ISBN: 0-7803-6711-1
- OEHLEN P: "NOISE AND CROSSTALK LIMITATIONS IN OPTICAL CROSS-CONNECTS WITH RESHAPING WAVELENGTH CONVERTERS" JOURNAL OF LIGHTWAVE TECHNOLOGY, IEEE. NEW YORK, US, vol. 17, no. 8, août 1999 (1999-08), pages 1294-1301, XP000919570 ISSN: 0733-8724

## Description

L'invention se situe dans le domaine des réseaux de transmission optique utilisant le multiplexage en longueurs d'onde. Elle concerne les dispositifs de commutation optiques utilisables dans les noeuds de routage prévus dans ces réseaux.

L'invention a trait plus particulièrement aux commutateurs optiques reconfigurables qui, recevant par des ports d'entrée une pluralité de signaux multiplex (ou "WDM", de l'anglais "Wavelength Division Multiplexing") ont pour fonction d'aiguiller individuellement les canaux spectraux (ou plus simplement longueurs d'onde) constituant les signaux WDM reçus vers des ports de sortie respectifs sélectionnés en fonction d'une commande. Les canaux aiguillés vers un même port de sortie sont combinés de façon à former au niveau de ce port un signal multiplex de sortie.

Dans les réseaux WDM, les noeuds peuvent être équipés de dispositifs de régénération agissant séparément sur chaque canal des multiplex WDM reçus pour effectuer une remise en forme et une resynchronisation des signaux optiques avant leurs retransmission vers d'autres noeuds. Le réseau qui est alors dit "opaque" présente l'avantage de pouvoir assurer une qualité de transmission au moins égale à un niveau minimum fixé pour tous les itinéraires susceptibles d'être suivis par les différents canaux. En contrepartie, la présence des régénérateurs a une incidence sur le coût des noeuds du réseau qui est d'autant plus importante que le nombre de canaux WDM est élevé.

Une autre solution moins coûteuse consiste à concevoir un réseau dont les noeuds sont démunis de dispositifs de régénération individuelle des canaux. Un tel réseau qui est alors dit "transparent" peut toutefois comporter des amplificateurs optiques disposés pour amplifier simultanément les canaux des multiplex WDM transmis. Cette solution ne peut cependant convenir qu'à des réseaux de taille relativement modeste.

Un compromis peut aussi consister à réaliser un réseau "hybride" où seulement certains noeuds ou liaisons sont munis de régénérateurs, ou bien encore où des noeuds sont munis de quelques régénérateurs, en nombre inférieur à celui des canaux reçus, et qui ne sont utilisés sélectivement qu'en cas de besoin. Dans ce dernier cas, on bénéficie d'une solution à la fois souple et économique. Les noeuds sont alors dits "semi-transparents".

Pour réaliser un tel noeud semi-transparent, il convient de disposer d'un commutateur apte à sélectionner dynamiquement parmi les canaux WDM reçus ceux à extraire et auxquels une régénération ou, plus généralement, un traitement individuel sera appliqué. Le commutateur doit aussi permettre de réinsérer ensuite les canaux traités en les aiguillant vers leurs ports de sortie destinataires respectifs.

Pour effectuer ces opérations, une solution habituelle exploite le fait que les commutateurs intègrent généralement des fonctions d'extraction et d'insertion reconfigurables de canaux. Ces fonctions sont en effet prévues pour permettre la réception et l'émission sélectives de signaux au niveau du noeud. Ainsi, pour permettre des régénérations sélectives avec un tel commutateur, il suffit de réserver à cette fonction quelques ports d'extraction et d'insertion et de prévoir des moyens de régénération ayant des entrées couplées respectivement à ces ports d'extraction réservés, et des sorties couplées respectivement à ces ports d'insertion réservés. Les moyens de régénération peuvent être réalisés de diverses façons, par exemple avec une conversion dans le domaine électrique, mais ils doivent être accordables en longueur d'onde de façon à ce que les signaux régénérés insérés soient portés par les longueurs d'onde prédéfinies, généralement celles qu'avaient ces signaux avant leurs régénérations respectives de façon à simplifier la gestion du réseau.

Ainsi, pour effectuer une régénération d'un canal choisi d'un multiplex d'entrée choisi, on configure le commutateur d'une part pour qu'il extraie ce canal de son multiplex d'entrée et l'aiguille vers un des ports d'extraction réservés, et d'autre part pour qu'il couple le port d'insertion réservé correspondant au port de sortie destinataire du commutateur.

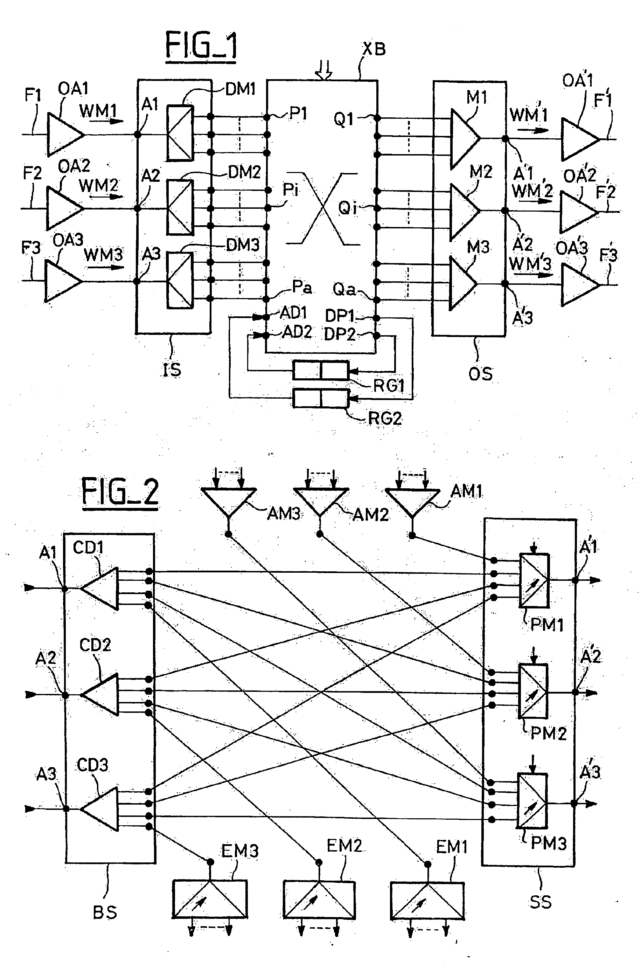

La figure 1 illustre une première possibilité de mise en oeuvre dans le cas particulier d'un noeud de routage couplé à trois fibres optiques d'entrée et trois fibres optiques de sortie. On y retrouve les éléments relatifs à un noeud de routage habituel, successivement :
- les fibres optiques d'entrée F1-F3 qui apportent respectivement les multiplex d'entrée WM1-WM3 par l'intermédiaire d'amplificateurs optiques d'entrée OA1-OA3;
- un étage d'entrée IS constitués de démultiplexeurs optiques DM1-DM3 ayant des entrées respectives A1-A3 couplées respectivement aux sorties des amplificateurs OA1-OA3;
- un commutateur spatial optique XB, par exemple de type "cross-bar", ayant des entrées P1,...Pi,...Pa couplées respectivement à des sorties des démultiplexeurs DM1-DM3, et des sorties Q1,...Qi,...Qa, et permettant de coupler sélectivement, en fonction d'une commande (non référencée), chaque sortie des démultiplexeurs à l'une quelconque de ses sorties Q1,...Qi,...Qa;
- un étage de sortie OS constitué de coupleurs optiques M1-M3 ayant chacun plusieurs entrées et une sortie, leurs entrées étant couplées respectivement à des sorties Q1,...Qi,...Qa du commutateur spatial XB, et leurs sorties A'1-A'3 délivrant respectivement des multiplex de sortie WM'1-WM'3;
- les fibres optiques de sortie F'1-F'3 qui reçoivent respectivement les multiplex de sortie WM'1-WM'3 par l'intermédiaire d'amplificateurs optiques de sortie OA'1-OA'3.

Le commutateur spatial XB comporte des ports de sortie et des ports d'entrée supplémentaires dédiés respectivement à l'extraction et l'insertion reconfigurables de canaux. Si on veut pouvoir effectuer des régénérations sélectives par exemple sur deux canaux d'entrées quelconques choisis, on réservera à cette fonction deux ports d'extraction DP1, DP2 et deux ports d'insertion AD1, AD2 et on prévoira des moyens de régénération RG1, RG2 ayant des entrées couplées respectivement à ces ports d'extraction réservés DP1, DP2, et des sorties couplées respectivement à ces ports d'insertion réservés AD1, AD2.

Cette méthode permet bien de réaliser la fonction recherchée, mais a pour inconvénient une absence de modularité liée à l'utilisation d'un commutateur spatial.

Dans le but d'améliorer la modularité, le brevet US 6 738 540 décrit un autre type de commutateur qui utilise comme élément de base un composant optique proposé par divers fournisseurs et connu sous l'appellation anglaise de "wavelength selection switch" ou "wavelength switch module". Une description d'un tel composant a été donnée par exemple lors de la conférence ECOC'2002, Copenhague, 9 septembre 2002, document 2.3.1, intitulé "The MWS 1x4 : A High Performance Wavelength Switching Building Block", par T. Ducellier et al.

Il est rappelé que ce composant peut être utilisé pour effectuer des fonctions de type "démultiplexage" ou de type "multiplexage" selon le sens de propagation des signaux. Dans le premier cas, un port de ce composant constitue une entrée et plusieurs autres ports constitue des sorties. Il permet alors d'aiguiller des canaux spectraux d'un multiplex reçu sur son entrée, sélectivement en fonction de leurs longueurs d'onde respectives et en fonction d'un signal de commande, vers des sorties respectives de ce module.

Ce composant réalise ainsi une fonction de démultiplexage programmable permettant de fournir sur une sortie quelconque choisie soit un canal sélectionné parmi les canaux du multiplex reçu, soit un multiplex de sortie constitué d'un ensemble de canaux sélectionnés parmi les canaux du multiplex reçu. Dans la suite, ce composant utilisé pour cette fonction sera désigné par "démultiplexeur programmable".

Il présente les particularités d'être capable de prendre en compte un grand nombre de canaux reçus, mais possède un nombre restreint de sorties, typiquement 4 ou 8 actuellement. On peut toutefois augmenter ce nombre en cascadant plusieurs de ces composants selon une structure en arbre. Dans la suite, un tel dispositif, composant ou assemblage de composants équivalant à un composant ayant un plus grand nombre de sorties, sera désigné par "module démultiplexeur programmable".

Le même composant peut aussi réaliser la fonction inverse en échangeant les rôles des sorties et de l'entrée. Il convient bien entendu que les canaux spectraux aiguillés vers la sortie aient des longueurs d'onde différentes. Le module réalise alors une fonction de multiplexage programmable permettant de fournir en sortie un canal sélectionné parmi les canaux reçus ou un multiplex de sortie constitué d'un ensemble de canaux sélectionnés parmi les canaux reçus. Dans la suite, ce composant utilisé pour cette dernière fonction sera appelé "multiplexeur programmable".

De même un dispositif formé d'un composant ou d'un assemblage de composants équivalant à un composant ayant un plus grand nombre d'entrées, sera désigné par "module multiplexeur programmable".

Ainsi, le brevet précité décrit entre autres une architecture de commutateur à base de coupleurs diffuseurs et de multiplexeurs programmables qui est reproduite à la figure 2, toujours dans le cas particulier de trois fibres optiques d'entrée et trois fibres optiques de sortie.

On y trouve successivement :
- un étage d'entrée BS constitué de coupleurs diffuseurs CD1-CD3 ayant chacun une entrée, respectivement A1-A3, et plusieurs sorties;
- un étage de sortie SS constitué de multiplexeurs programmables PM1-PM3 ayant chacun plusieurs entrées associées respectivement aux coupleurs diffuseurs de l'étage d'entrée, et une sortie constituant un port de sortie, respectivement A'1-A'3, du commutateur;
- un étage d'interconnexion couplant chaque entrée des multiplexeurs programmables de l'étage de sortie qui est associée à un coupleur diffuseur à une sortie du coupleur diffuseur associé à cette entrée.

Cette disposition permet d'aiguiller des canaux spectraux portés par des longueurs d'onde respectives de signaux optiques multiplex reçus par les entrées A1-A3, sélectivement vers des ports de sortie respectifs A'1-A'3 sélectionnés en fonction de commandes (non référencées) appliquées aux multiplexeurs programmables PM1-PM3.

Pour réaliser la fonction d'extraction de canaux reconfigurable, il est par ailleurs prévu des démultiplexeurs programmables EM1-EM3 associés respectivement aux coupleurs diffuseurs CD1-CD3, et ayant chacun une entrée couplée à une sortie du coupleur diffuseur associé. Ainsi, selon les commandes (non référencées) appliquées aux démultiplexeurs programmables EM1-EM3, il est possible d'extraire n'importe quels canaux de n'importe quel signal multiplex d'entrée.

Pour réaliser la fonction d'insertion de canaux reconfigurable, il est enfin prévu des coupleurs combineurs AM1-AM3 associés respectivement aux multiplexeurs programmables PM1-PM3, et ayant chacun une sortie couplée à une entrée du multiplexeur programmable associé. Ainsi, selon les commandes (non référencées) appliquées aux multiplexeurs programmables, il est possible d'insérer des canaux vers n'importe quels ports de sortie A'1-A'3.

Pour effectuer des régénérations sélectives sur des canaux d'entrées quelconques choisis, il convient d'abord de commander les démultiplexeurs programmables EM1-EM3 de façon à ce que ces canaux à régénérer soient aiguillés vers des sorties de ces démultiplexeurs programmables. Les canaux extraits doivent alors être guidés vers des dispositifs de traitement (non représentés), dont les sorties doivent être couplées sélectivement via les coupleurs combineurs AM1-AM3 vers des entrées des multiplexeurs programmables qui mènent aux ports de sortie A'1-A'3 destinataires.

Cette méthode permet bien de réaliser la fonction recherchée, mais a pour inconvénient de nécessiter un système d'aiguillage important entre les sorties des démultiplexeurs programmables EM1-EM3, les dispositifs de traitement et les entrées des coupleurs combineurs AM1-AM3.

L'invention vise à remédier aux inconvénients des solutions précédentes en proposant une nouvelle structure de commutateur optique qui soit modulaire tout en optimisant l'utilisation de ses éléments constitutifs.

Plus précisément, l'invention a pour objet un dispositif de commutation optique prévu pour aiguiller des canaux spectraux portés par des longueurs d'onde respectives d'au moins un signal optique multiplex, sélectivement vers des ports de sortie respectifs sélectionnés en fonction d'une commande, ce dispositif de commutation comportant :
- un étage d'entrée comprenant au moins un module de diffusion apte à fournir sur plusieurs sorties des duplications d'un signal optique multiplex,
- un étage de sortie comprenant plusieurs modules multiplexeurs programmables ayant chacun des entrées associées respectivement auxdits modules de diffusion, la sortie de chaque module multiplexeur programmable constituant un desdits ports de sortie,
- un étage intermédiaire couplant chaque entrée des modules multiplexeurs programmables qui est associée à un module de diffusion à une sortie du module de diffusion associé à cette entrée,
ledit dispositif de commutation étant caractérisé en ce que l'un au moins desdits modules de diffusion comporte un module démultiplexeur programmable muni d'au moins une sortie dite "de transit" et d'au moins une sortie dite "de sélection", et un coupleur en étoile muni de première et seconde entrées et de n sorties constituant des sorties du module de diffusion, en ce qu'une sortie de transit est couplée à ladite première entrée du coupleur en étoile, et en ce qu'une entrée et une sortie d'un dispositif de traitement sont couplées respectivement à une sortie de sélection et à ladite seconde entrée dudit coupleur en étoile.

Il est rappelé qu'un "module démultiplexeur programmable" désigne ici un dispositif optique comportant une entrée et plusieurs sorties, et apte à aiguiller des canaux spectraux reçus sur son entrée, sélectivement en fonction de leurs longueurs d'onde respectives et en fonction d'un signal de commande, vers des sorties respectives de ce module.

De même, un "module multiplexeur programmable" désignera un dispositif optique comportant plusieurs entrées et une sortie, et apte à aiguiller des signaux reçus sur des entrées respectives, sélectivement en fonction des longueurs d'onde des signaux reçus et des entrées respectives et en fonction d'un signal de commande, vers la sortie de ce module.

Cette solution présente les avantages de permettre une modularité dans la réalisation, tout en minimisant le nombre de ressources réservées à la régénération. En particulier, et contrairement aux solutions connues précitées, l'utilisation telle qu'indiquée de coupleurs permet l'aiguillage des signaux régénérés par les mêmes moyens de diffusion et de sélection que ceux des signaux en transit.

Le traitement local pouvant être appliqué à un signal par le dispositif de traitement mentionné peut être quelconque. Il consistera typiquement en une régénération ou une substitution d'information portée par le signal, tout en conservant la même longueur d'onde.

Par ailleurs, il convient de remarquer que chaque coupleur en étoile reçoit en entrée soit des canaux en transit, issus de la sortie de transit, soit des canaux ayant subit un traitement local. Ces derniers canaux, par exemple issus de régénérateurs, pourront donc présenter des puissances appropriées voulues. Mais ce n'est pas le cas pour les canaux en transit.

Il peut donc être utile que la sortie de transit du module démultiplexeur programmable soit couplée à la première entrée du coupleur en étoile par l'intermédiaire d'un amplificateur optique.

D'autre part, comme cela est montré sur la figure 1, on dispose normalement des amplificateurs optiques en amont des ports d'entrée du commutateur. Dans ce cas, il sera avantageux de prévoir pour cela des amplificateurs optiques à double étage et, dans chaque module de diffusion concerné, de disposer l'un de ces étages entre la sortie de transit du module démultiplexeur programmable et la première entrée du coupleur en étoile, l'autre étage étant couplé à l'entrée du module démultiplexeur programmable.

Toutefois on cherchera autant que possible à éviter de recourir à une amplification entre la sortie de transit du module démultiplexeur programmable et la première entrée du coupleur en étoile, ou du moins à n'y recourir que pour les commutateurs de taille importante.

Selon une première possibilité, on prend en compte le fait que, pour un coupleur en étoile ayant n ports de sortie et m ports d'entrée, les pertes optiques subies par chaque signal transitant par ce coupleur augmentent en fonction du plus grand des nombres n et m. Or, pour bénéficier d'une connectivité complète, n doit être au moins égal au nombre de ports de sortie du commutateur. Par conséquent, on obtiendra une utilisation optimale du coupleur, en termes de pertes et de nombre de canaux pouvant être régénéré si m est égal à n ou du moins inférieur n, par exemple tant que le commutateur n'est pas utilisé à pleine capacité.

Selon une autre possibilité visant à réduire le plus possible le nombre d'entrées du coupleur en étoile sans devoir limiter le nombre de canaux traités, si le dispositif de traitement optique a plusieurs sorties, ledit module de diffusion pourra comporte un coupleur primaire ayant des entrées couplées aux sorties du dispositif de traitement optique , et une sortie couplée à une entrée du coupleur en étoile.

Selon une possibilité de réalisation permettant d'augmenter le nombre total de ports de sortie du commutateur, le module de diffusion pourra comporter p coupleurs en étoile et le module démultiplexeur programmable sera muni de p sorties de transit couplées respectivement à des entrées correspondantes de ces p coupleurs en étoile.

L'invention concerne également un noeud de commutation pour réseau de transmission optique dans lequel un dispositif de commutation est conforme à la description ci-dessus.

L'invention concerne enfin un réseau de transmission optique comportant au moins un tel noeud de commutation.

D'autres aspects et avantages de l'invention apparaîtront dans la suite de la description en référence aux figures.
- La figure 1 commentée précédemment représente un noeud de routage muni d'un premier dispositif de commutation selon l'état de la technique.
- La figure 2 commentée précédemment représente un second dispositif de commutation selon l'état de la technique.
- La figure 3 représente un dispositif de commutation optique selon l'invention.
- Les figures 4 à 6 représentent des variantes de réalisation d'un module de diffusion du dispositif de commutation optique selon l'invention.

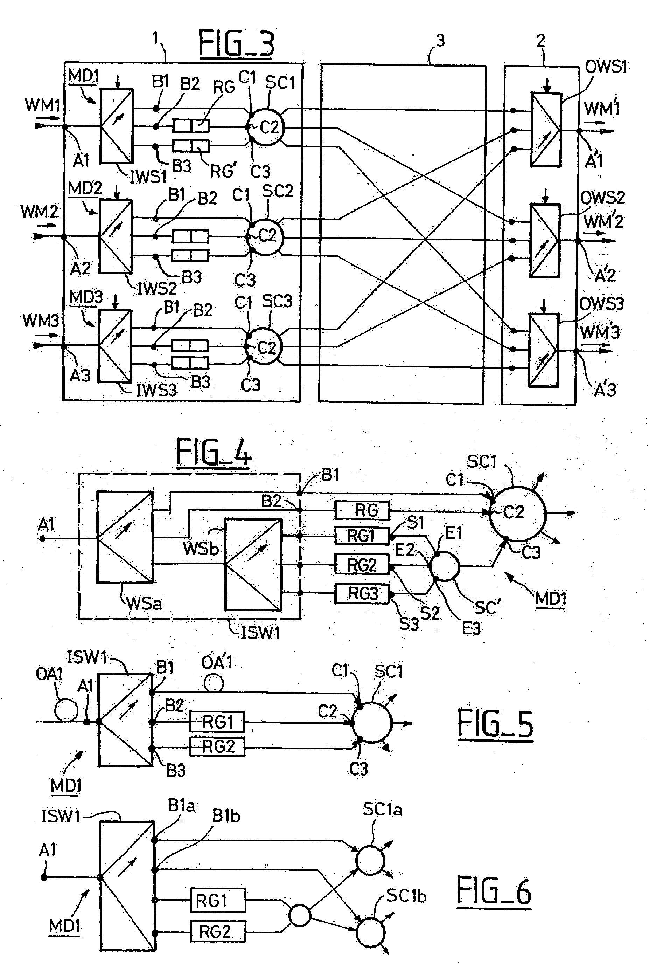

La figure 3 montre un exemple de structure du dispositif de commutation selon l'invention toujours dans le cas particulier de trois fibres optiques d'entrée et trois fibres optiques de sortie.

Un étage d'entrée 1 comprend trois modules de diffusion MD1-MD3 recevant respectivement des signaux multiplex primaires d'entrée WM1-WM3.

Un étage de sortie 2 comprend des modules multiplexeurs programmables OWS1-OWS3 dont les sorties constituent respectivement des ports de sortie A'1-A'3 du dispositif de commutation. Les entrées de chaque module multiplexeur sont associées respectivement aux différents modules de diffusion MD1-MD3.

Un étage intermédiaire 3 est constitué de liaisons optiques qui couplent chaque entrée de chaque module multiplexeur programmable à une sortie du module de diffusion associé à cette entrée.

Chaque module de diffusion MD1-MD3 comporte un module démultiplexeur programmable IWS1-IWS3 et un coupleur en étoile SC1-SC3

Chaque module démultiplexeur programmable comprend une entrée qui constitue ports d'entrée A1-A3 du dispositif de commutation, et plusieurs sorties.

Une première sortie de chaque module démultiplexeur programmable, par exemple la sortie B1 de IMS1, est couplée directement à une première entrée C1 du coupleur en étoile SC1. D'autre sorties de chaque module démultiplexeur programmable, par exemple les sorties B2 et B3 de IWS1, sont couplées à des entrées respectives de dispositifs de traitement RG, RG' qui sont typiquement des régénérateurs par exemple de type dit "3R" (pour Réamplification, Remise en forme, Resynchronisation). Les sorties de ces dispositifs sont couplées à des entrées respectives C2 et C3 du coupleur en étoile SC1.

La sortie B1 est ainsi dédiée aux canaux devant transiter dans le commutateur de façon transparente, c'est-à-dire sans subir de traitement, ni faire l'objet de substitution d'information. Cette sortie B1 sera dite "de transit" et les autres sorties B2, B3 seront dites "de sélection".

Ainsi, les commandes appliquées aux modules démultiplexeurs programmables IWS1-IWS3 permettent de sélectionner les canaux à traiter et ceux qui doivent seulement transiter. Les commandes appliquées aux modules multiplexeurs programmables OWS1-OWS3 vont d'autre part permettre d'effectuer les aiguillages à la fois des canaux traités et des canaux en transit.

Comme signalé précédemment, les pertes optiques subies par les canaux en transit à cause du coupleur en étoile sont les plus critiques. Le nombre n de sorties du coupleur est en fait imposé par le nombre nominale de fibres de sorties devant être installées. Il conviendra donc que le coupleur en étoile comporte un nombre d'entrées qui ne dépasse pas ce nombre n.

Il est en fait possible d'atteindre cet objectif même si le nombre total de canaux traités devient important. Ce cas est illustré à la figure 4 qui montre un module de diffusion MD1 dont le coupleur SC1 n'a que 3 sorties alors que le module démultiplexeur programmable ISW1 a 5 sorties.

Le module démultiplexeur programmable ISW1 est ici constitué de deux démultiplexeurs programmables (composants) WSa et WSb couplés en cascade, le second WSb permettant d'accéder à un dispositif de traitement à trois éléments RG1-RG3 prévus pour traiter trois canaux. Les trois sorties S1-S3 des éléments RG1-RG3 sont donc des sorties du dispositif de traitement. On prévoira alors un coupleur primaire (SC') ayant des entrées E1-E3 couplées respectivement aux sorties S1-S3 des éléments RG1-RG3, et une sortie (non référencée) couplée à une entrée du coupleur en étoile SC1.

Si malgré ces mesures les pertes sont trop importantes, on pourra toujours prévoir un amplificateur optique inséré entre la sortie de transit B1 du module démultiplexeur programmable IWS1 et la première entrée C1 du coupleur en étoile SC1-SC3.

S'il est prévu une amplification en amont du démultiplexeur programmable, on aura avantage à utiliser un amplificateur optique à double étage selon le montage représenté à la figure 5. L'amplificateur optique inséré entre la sortie de transit B1 et le coupleur SC1 constituera alors un étage OA'1 d'un amplificateur optique à double étage et l'autre étage OA1 sera couplé à l'entrée du module démultiplexeur programmable IWS1.

Une dernière variante de réalisation permettant d'accroître le nombre de fibres de sortie sans pénalité en puissance est représentée par la figure 6.

Le module de diffusion MD1 comporte 2 coupleurs en étoile SC1a, SC1b et le module démultiplexeur programmable IWS1 est muni de 2 sorties de transit Bla, B2b couplées respectivement à des entrées correspondantes des 2 coupleurs en étoile SC1a, SC1b. Les signaux régénérés issus des éléments RG1 et RG2 sont alors combinés puis appliqués à chacun coupleurs en étoile SC1a, SC1b.

Sur la base de cet exemple, on voit que le fait de prévoir deux coupleurs au lieu d'un seul permet de doubler le nombre de fibres de sortie pouvant être desservies par le module de diffusion, tout en limitant les pertes à celles dues aux coupleurs à deux entrées et deux sorties, et non pas à celles dues aux coupleurs à quatre entrées et quatre sorties.

Dans le cas général, on pourra prévoir p coupleurs en étoile et le module démultiplexeur programmable sera alors muni de p sorties de transit couplées respectivement à des entrées correspondantes de ces p coupleurs en étoile.

## Revendications

1. Dispositif de commutation optique prévu pour aiguiller des canaux spectraux portés par des longueurs d'onde respectives d'au moins un signal optique multiplex, sélectivement vers des ports de sortie respectifs (A'1-A'3) sélectionnés en fonction d'une commande, ce dispositif de commutation comportant :
- un étage d'entrée (1) comprenant au moins un module de diffusion (MD1-MD3) apte à fournir sur plusieurs sorties des duplications d'un signal optique multiplex,
- un étage de sortie (2) comprenant plusieurs modules multiplexeurs programmables (OWS1-OWS3) ayant chacun des entrées associées respectivement auxdits modules de diffusion (MD1-MD3), la sortie de chaque module multiplexeur programmable constituant un desdits ports de sortie (A'1-A'3),
- un étage intermédiaire (3) couplant chaque entrée des, modules multiplexeurs programmables qui est associée à un module de diffusion (MD1-MD3) à une sortie du module de diffusion associé à cette entrée,
ledit dispositif de commutation étant **caractérisé en ce que** l'un au moins desdits modules de diffusion (MD1-MD3) comporte un module démultiplexeur programmable (IWS1-IWS3) muni d'au moins une sortie dite "de transit" (B1) et d'au moins une sortie dite "de sélection" (B2), et un coupleur en étoile (SC1-SC3) muni de première et seconde entrées (C1, C2) et de n sorties constituant des sorties du module de diffusion, **en ce qu'**une sortie de transit (B1) est couplée à ladite première entrée (C1) du coupleur en étoile (SC1-SC3), et **en ce qu'**une entrée et une sortie d'un dispositif de traitement (RG, RG') sont couplées respectivement à une sortie de sélection (B2) et à ladite seconde entrée (C2) dudit coupleur en étoile (SC1-SC3).

2. Dispositif de commutation selon la revendication 1, **caractérisé en ce que** ledit coupleur en étoile (SC1-SC3) comporte un nombre d'entrées au plus égal à n.

3. Dispositif de commutation selon l'une des revendications 1 à 2, **caractérisé en ce que** ledit dispositif de traitement optique (RG1-RG3) ayant plusieurs sorties (S1-S3), ledit module de diffusion (MD1) comporte un coupleur primaire (SC') ayant des entrées (E1-E3) couplées auxdites sorties (S1-S3) dudit dispositif de traitement optique (RG1-RG3), et une sortie couplée à une entrée dudit coupleur en étoile (SC1).

4. Dispositif de commutation selon l'une des revendications 1 à 3, **caractérisé en ce que** ladite sortie de transit (B1) du module démultiplexeur programmable (IWS1) est couplée à ladite première entrée (C1) dudit coupleur en étoile (SC1-SC3) par l'intermédiaire d'un amplificateur optique (OA'1).

5. Dispositif de commutation selon la revendication 4, **caractérisé en ce que** ledit amplificateur optique (OA'1) constitue un étage d'un amplificateur optique à double étage (OA1, OA'1) dont l'autre étage est couplé à l'entrée dudit module démultiplexeur programmable (IWS1).

6. Dispositif de commutation selon l'une des revendications 1 à 4, **caractérisé en ce que** ledit module de diffusion (MD1) comporte p coupleurs en étoile (SC1a, SC1b) et **en ce que** ledit module démultiplexeur programmable (IWS1) est muni de p sorties de transit (B1a, B2b) couplées respectivement à des entrées correspondantes desdits p coupeurs en étoile (SC1a, SC1b).

7. Dispositif de commutation selon l'une des revendications 1 à 6, **caractérisé en ce que** ledit traitement appliqué à un signal consiste en une régénération ou une substitution d'information portée par le signal.

8. Noeud de commutation pour réseau de transmission optique dans lequel un dispositif de commutation est conforme à l'une des revendications 1 à 7.

9. Réseau de transmission optique, **caractérisé en ce qu'**il comporte au moins un noeud de commutation selon la revendication 8.

## Claims

1. An optical switching device operative to route spectral channels carried by respective wavelengths of at least one multiplex optical signal, selectively to respective output ports (A'1-A'3) selected based on a command, which switching device comprises
- an input stage (1) comprising at least one distribution module (MD1-MD3) capable of providing duplicates of a multiplex optical signal at multiple outputs,
- an output stage (2) comprising multiple programmable multiplexer modules (OWS1-OWS3.) each having inputs respectively associated with said distribution modules (MD1-MD3), the output of each programmable multiplexer module constituting one of said output ports (A'1-A'3),
- an intermediate stage (3) couples each input of the programmable multiplexer modules that is associated with a distribution module (MD1-MD3) to an output of the distribution module associated with that input,
said switching device being **characterized in that** at least one of said distribution modules (MD1-MD3) comprises a programmable demultiplexer module (IWS1-IWS3) equipped with at least one so-called "transit" output (B1) and at least one so-called "selection" output (B2), and a star coupler (SC1-SC3) equipped with first and second inputs (C1, C2) and with n outputs constituting outputs of the distribution module, and **in that** a transit output (B1) is coupled to said first input (CI) of the star coupler (SC1-SC3), and **in that** one input and one output of a processing device (RG, RG') are respectively coupled to a selection output (B2) and to said second input (C2) of said star coupler (SC1-SC3).

2. A switching device according to claim 1, **characterized in that** said star coupler (SC1-SC3) comprises a number of inputs no greater than n.

3. A switching device according to one of the claims 1 to 2, **characterized in that** said optical processing device (RG1-RG3) has multiple outputs (S1-S3), and said distribution module (MD1) comprises a primary coupler (SC') having inputs (E1-E3) coupled to said outputs (S1-S3) of said optical processing device (RG1-RG3), and one output coupled to an input of said star coupler (SC1).

4. A switching device according to one of the claims 1 to 3, **characterized in that** said transit output (B1) of the programmable demultiplexer module (IWS1) is coupled to said first input (C1) of said star coupler (SC1-SC3) by means of an optical amplifier (OA'1).

5. A switching device according to claim 4, **characterized in that** said optical amplifier (OA'1) constitutes one stage of a two-stage optical amplifier (OA1, OA'1) whose other stage is coupled to the input of said demultiplexer module (IWS1).

6. A switching device according to one of the claims 1 to 4, **characterized in that** said distribution module (MD1) comprises p star couplers (SC1a, SC1b) and **in that** said programmable demultiplexer module (IWS1) is equipped with p transit outputs (B1a, B2b) coupled respectively to corresponding inputs of said p star couplers (SC1 a, SC1 b)

7. A switching device according to one of the claims 1 to 6, **characterized in that** said processing applied to a signal consists of regenerating or substituting information carried by the signal.

8. A switching node for an optical transmission network in which a switching device is in accordance with one of the claims 1 to 7.

9. An optical transmission network, **characterized in that** it comprises at least one switching node according to claim 8.

## Patentansprüche

1. Optische Schaltvorrichtung, dafür bestimmt, von jeweiligen Wellenlängen mindestens eines optischen Multiplexsignals transportierte Spektralkanäle selektiv an jeweilige in Abhängigkeit von einem Befehl ausgewählte Ausgangsports (A'1-A'3) zu lenken, wobei diese Schaltvorrichtung umfasst:
- Eine Eingangsstufe (1) mit mindestens einem Abstrahlmodul (MD1-MD3), welches fähig ist, an mehreren Ausgängen Duplikationen eines optischen Multiplexsignals bereitzustellen,
- eine Ausgangsstufe (2) mit mehreren programmierbaren Multiplexermodulen (OWS1-OWS3), von denen ein jedes jeweils mit den besagten Abstrahlmodulen (MD1-MD3) assoziierte Eingänge aufweist, wobei der Ausgang eines jeden programmierbaren Multiplexermoduls einen der besagten Ausgangsports (A'1-A'3) darstellt,
- eine Zwischenstufe (3), welche jeden Eingang der programmierbaren Multiplexermodule, der mit einem Abstrahlmodul (MD1-MD3) assoziiert ist, an einen Ausgang des mit diesem Eingang assoziierten Abstrahlmoduls koppelt,
wobei die besagte Schaltvorrichtung **dadurch gekennzeichnet ist, dass** mindestens eines der besagten Abstrahimodule (MD1-MD3) ein programmierbares Demultiplexermodul (IWS1-IWS3) mit mindestens einem sogenannten "Transit"-Ausgang (B1) und mindestens einem sogenannten "Auswahl"-Ausgang (B2) sowie einen Sternkoppler (SC1-SC3) mit einem ersten und einem zweiten Eingang (C1, C2) und n Ausgängen, welche Ausgänge des Abstrahlmoduls darstellen, aufweist, dass ein Transitausgang (B1) an den besagten ersten Eingang (C1) des Stemkopplers (SC1-SC3) gekoppelt ist, und dass ein Eingang und ein Ausgang einer Verarbeitungsvorrichtung (RG, RG') jeweils an einen Auswahlausgang (B2) und an den besagten zweiten Eingang (C2) des besagten Sternkoppters (SC1-SC3) gekoppelt ist.

2. Optische Schaltvorrichtung nach Anspruch 1, **dadurch gekennzeichnet, dass** der besagte Sternkoppler (SC1-SC3) eine höchstens n entsprechende Anzahl von Eingängen aufweist.

3. Optische Schaltvorrichtung nach einem der Ansprüche 1 bis 2, **dadurch gekennzeichnet, dass** die besagte optische Verarbeitungsvorrichtung (RG1-.RG3) mehrere Ausgänge (S1-S3) aufweist, wobei das besagte Abstrahlmodul (MD1) einen Primärkoppler (SC') mit an die besagten Ausgänge (S1-S3) der besagten optischen Verarbeitungsvorrichtung (RG1-RG3) gekoppelten Eingängen (E1-E3) und einen an einen Eingang des besagten Stemkopplers (SC1) gekoppelten Ausgang aufweist.

4. Optische Schaltvorrichtung nach einem der Ansprüche 1 bis 3, **dadurch gekennzeichnet, dass** der besagte Transitausgang (B1) des programmierbaren Demultiplexermoduls (IWS1) über einen optischen Verstärker (OA'1) an den besagten ersten Eingang (C1) des besagten Sternkopplers (SC1-SC3) gekoppelt ist.

5. Optische Schaltvorrichtung nach Anspruch 4, **dadurch gekennzeichnet, dass** der besagte optische Verstärker (OA' 1) eine Stufe eines zweistufigen optischen Verstärkers (OA1, OA'1) darstellt, dessen andere Stufe an den Eingang des besagten programmierbaren Demultiplexermoduls (IWS1) gekoppelt ist.

6. Optische Schaltvorrichtung nach einem der Ansprüche 1 bis 4, **dadurch gekennzeichnet, dass** das besagte Abstrahlmodul (MD1) p Sternkoppler (SC1a, SC1b) aufweist, und dass das besagte programmierbare Demultiplexermodul (IWS1) mit p Transitausgängen (B1a, B2b) versehen ist, welche jeweils an entsprechende Eingänge der besagten p Sternkoppler (SC1a, SC1b) gekoppelt sind.

7. Optische Schaltvorrichtung nach einem der Ansprüche 1 bis 6, **dadurch gekennzeichnet, dass** die besagte Verarbeitung eines Signals in einer Regeneration oder einer Substitution der von dem Signal transportierten Informationen besteht.

8. Vermittlungsknoten für ein optisches Übertragungsnetzwerk, in welchem eine optische Schaltvorrichtung einem der Ansprüche 1 bis 7 entspricht.

9. Optisches Übertragungsnetzwerk, **dadurch gekennzeichnet, dass** es mindestens einen Vermittlungsknoten gemäß Anspruch 8 umfasst.
